# EUROPEAN PATENT SPECIFICATION

(11) **EP 2 982 563 B1**
(45) Date of publication and mention of the grant of the patent: **16.09.2020**
(21) Application number: 14778604.0
(22) Date of filing: 18.03.2014
(51) Int. Cl.: B62D 15/02, B60W 30/10, B60W 30/12, B60W 30/14, B60W 40/02

(54) **AUTOMATIC DRIVING SYSTEM FOR VEHICLE**
AUTOMATISCHES ANTRIEBSSYSTEM FÜR EIN FAHRZEUG
SYSTÈME DE CONDUITE AUTOMATIQUE POUR VÉHICULE

(30) Priority: 01.04.2013 KR 20130035003
(43) Date of publication of application: 10.02.2016
(73) Proprietor: Park, Su-Min, Namdong-gu, Incheon 405-768 (KR); Park, Young-Il, Namdong-gu, Incheon 405-768 (KR)
(72) Inventor: PARK, Su-Min, Namdong-gu (KR)
(74) Representative: Petraz, Gilberto Luigi
(86) International application number: PCT/KR2014/002257
(87) International publication number: WO 2014/163307

(56) References cited:
- EP-A1- 1 383 098
- EP-A2- 0 939 297
- JP-A- H1 186 182
- JP-A- H08 241 495
- KR-A- 20090 124 535
- KR-A- 20120 026 690
- US-B2- 7 680 569

## Description

### Technical Field

The present invention relates to an automatic driving system for a vehicle, and in particular to an automatic driving system for a vehicle wherein when a driver sets a destination on a navigation device, a vehicle can be controlled to be automatically driven to the set destination in consideration of traffic signals, nearby vehicles and things.

### Background Art

When a driver sets a predetermined speed, a conventional automatic driving system in general allows to maintain the set speed unless the driver operates an accelerator. Such an automatic driving system in general is called an auto drive, an automatic, an auto cruise, etc.

The above automatic driving system is able to control the speed of a vehicle and a distance to a forward vehicle. Sensor detect a distance to a forward vehicle, thus controlling a throttle and a brake with the aid of a computer, whereupon the vehicle can be driven in safe while maintaining a safety distance between vehicles.

If a driver sets a predetermined speed on a road on which a high speed drive is available, the vehicle is controlled to be driven at the set speed. To this end, the driver does not need to operate an accelerator pedal for driving at the set speed, whereupon a driver's fatigue may be reduced a lot.

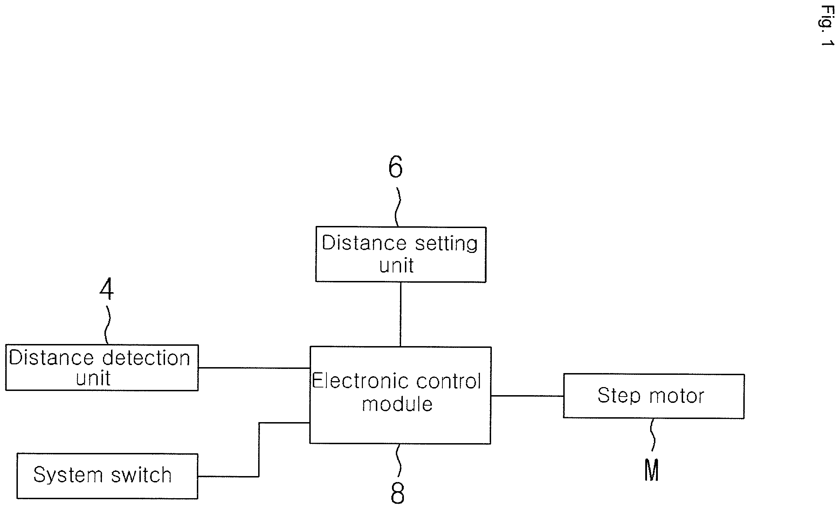

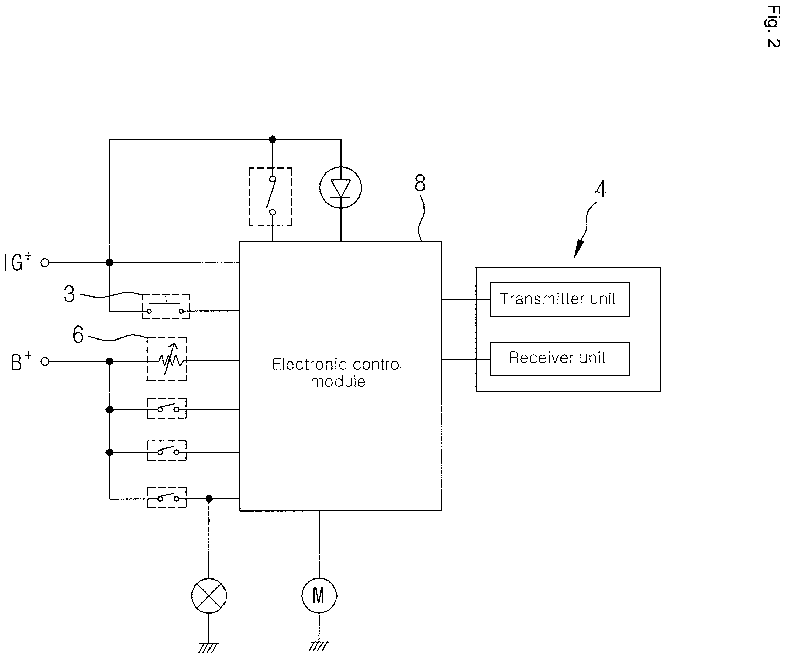

As illustrated in Figures 1 and 2, the Korean patent registration number 10-0180496 describes a technology on such an automatic driving system as an example. The technical features thereof will be described below. The automatic driving system wherein a user can drive a vehicle at a predetermined speed by selecting a manual or automatic driving includes a selection switching unit for selecting a predetermined vehicle among forward vehicles; a distance detection unit 4 for detecting a distance to a forward vehicle with the aid of a transceiver unit so as to measure to the vehicle detected by the selection switching unit; a distance setting unit 6 for setting a distance to the vehicle selected by the selection switching unit in proportion to a vehicle speed; an electronic control module 8 for outputting an acceleration and deceleration signal so as to control a safety distance to a forward vehicle in consideration of a signal detected by the distance detection unit 4 in accordance with a signal set by the distance setting unit 6; and a step motor "M" for maintaining a safety distance to a forward vehicle by controlling the revolution of an accelerator control motor in response to a signal outputted from the electronic control module 8.

The technology disclosed in the Korean patent registration number 10-0180496 has an advantage in the way that a driver can drive a vehicle at a predetermined speed while maintaining a distance to a forward vehicle in the inside of his vehicle unless the driver controls acceleration and deceleration, thus reducing any fatigue; however only a simple speed control is available, and a steering control of a vehicle is impossible. For this reason, the driver needs to control a steering handle, which still makes the driver feel fatigue.

A known vehicle position information displaying apparatus is described for example in document EP 0 939 297 A2. In document US 7 680 569 A2 a known automotive lane deviation prevention apparatus is described. In document JP H08 241495 A a known safe running control system is disclosed.

### Disclosure of Invention

Accordingly, the present invention is made in an effort to improve the above-mentioned problems. It is an object of the present invention to provide an automatic driving system for a vehicle wherein when a driver sets a destination on a navigation device, a mapping module disposed in the inside of an automatic driving device receives a route information set on the navigation device and converts a distance, direction, and rotation angle into an actual measurement data with which the vehicle is actually driven, thus forming a driving lane, and a driving control module allows to control an accelerator, a brake and a steering device of the vehicle based on the driving lane, so the vehicle can be automatically driven to the set destination.

It is another object of the present invention to provide an automatic driving system for a vehicle wherein a driving control module disposed at an automatic driving device stores information on an accurate position of each wheel of a vehicle, an angle at which a wheel rotates when adjusting a steering device and the size of a wheel, so the vehicle can be accurately driven along a driving lane formed by the mapping module.

It is further another object of the present invention to provide an automatic driving system for a vehicle wherein a driving safety module disposed at an automatic driving device includes a wireless receiver unit for receiving in real time the information on a traffic signal from each signal lamp and detecting a signal of the signal lamp, whereupon the vehicle can be driven in compliance with the signal, thus being driven in safe at a crossroad, a crosswalk, etc.

It is still further another object of the present invention to provide an automatic driving system for a vehicle wherein when setting a mapping module, the width and number of lanes formed on a road are set, and there are provided a main driving lane on which a vehicle can be directly driven based on one among the lanes formed on a road, and an assistant driving lane which allows a vehicle to be driven on another lane, thus easily changing the lane in such a way to change the assistant driving lane to the main driving lane.

It is still further another object of the present invention to provide an automatic driving system for a vehicle wherein a position detection module is provided at an automatic driving device so as to accurately determine a lane on which a vehicle positions in a road, thus more accurately controlling a vehicle. The driving lane that a vehicle was driven before and an image taken by a camera can be stored in a storing unit. If the vehicle uses the same driving lane, the stored image can be compared with a currently taken image, thus more accurately controlling.

To achieve the above objects, there is provided an automatic driving system for a vehicle, which may include, but is not limited to, a mapping module which receives a route information set on a navigation device installed at a vehicle and converts a distance, a direction and a rotation angle into an actual measurement data and sets a driving lane; and a driving control module which allows the vehicle to be driven on the driving lane set by the mapping module.

It is characterized in that the driving control module is configured to store a vehicle information on a position of each wheel, a rotation angle of each wheel rotating when a steering device is operated, and a diameter of each wheel.

It is characterized in that the driving control module is configured to control an engine, a brake and the steering device in consideration of the vehicle information for the vehicle to be driven on a driving lane with the aid of an ECU (Electronic Control Unit) provided at the vehicle.

It is characterized in that there is further provided an error correction module which is able to correct a driving lane based on the current position of the vehicle received from the navigation device by comparing the current position of the vehicle received from the navigation device with the position on the driving lane.

It is characterized in that there is further provided a driving safety module which allows to prevent any collision in such a way to detect other vehicles or things near the vehicle with the aid of a distance detection sensor installed at front, rear, left and right sides of the vehicle.

It is characterized in that the driving safety module includes a wireless receiver unit which is able to receive a signal lamp information from a wireless transmitter unit installed at a signal lamp at a crossroad or a crosswalk.

It is characterized in that when setting a driving lane, the mapping module sets together information on a crossroad, a crosswalk, a tunnel, a signal lamp, a regulated speed of a road, and an exclusive frequency of each signal lamp.

It is characterized in that the mapping module is configured to store information on the width and number of the lanes formed on each road on which the vehicle is driven and form a main driving lane allowing the vehicle to be directly driven on any of the lanes formed on the road, and an assistant lane allowing the vehicle to be driven on other lanes.

It is characterized in that there is further provided a lane control module for detecting the lane in order for the vehicle not to deviate from the lane.

It is characterized in that the lane control module may include, but is not limited to, an image process module which is configured to process the images transmitted from a camera installed at a front side of the vehicle; and a lane detection module which is configured to determine each lane by analyzing the pattern of each lane in the images processed by the image process module.

In addition, it is characterized in that the lane control module may include, but is not limited to, an image process module for processing the images from a camera installed at a front side of a vehicle; and a lane detection module for determining each lane by analyzing the pattern of a corresponding lane in the image processed by the image process module.

Here, it is characterized in that a position detection module is further provided so as to detect the position of a vehicle. The position detection module allows to determine a lane on which a road positions in a road based on a lane information detected with the aid of the image process module and the lane detection module.

Meanwhile, it is characterized in that a position detection module may be further provided so as to detect the position of a vehicle. The position detection module may include a first transceiver device for transmitting and receiving a high frequency signal. At each side of a road, there is provided a second transceiver device for receiving the signal of the first transceiver device and transmitting a signal, with the second transceiver devices being disposed spaced apart from each other. The position detection module may determine a lane on which a vehicle positions in a road with the aid of a distance between two sides of a road and a width information of a lane based on a signal received through the first and second transceiver devices.

In addition, it is characterized in that a road state detection module is further provided so as to determine the stare of a road. The road state detection module is able to determine if there is any crack or dent on a road by analyzing the image taken by a camera disposed at a vehicle.

It is characterized in that there is further provided a storing unit for storing a driving lane on which a vehicle was driven before, and an image taken using a camera installed at a vehicle, and the above image is stored matching with the position of the driving lane.

In addition, it is characterized in that when a vehicle is driven on a road on which the vehicle was driven before, a vehicle is controlled comparing the image stored in the storing unit with the image being currently taken by the camera.

Meanwhile, it is characterized in that a wireless receiver unit may receive a geographical information of a parking lot transmitted through a wireless transceiver unit provided at a parking lot and an information of a space in which a vehicle is parking, and the mapping module may form a detailed driving lane so as to move and park a vehicle at a parking position in the parking lot from the current position of the vehicle.

Here, it is characterized in that there is further provided a position detection module for detecting the position of a vehicle. The position detection module may include a first transceiver device for transmitting and receiving a high frequency signal. At an edge portion of the parking lot, there is provided a third transceiver device for receiving a signal of the first transceiver device and transmitting a signal. The position detection module may measure the position of a vehicle with the aid of an edge portion detected based on a signal received through the first and third transceiver devices, and a geographical information of the parking lot.

In addition, it is characterized in that the current signal is determined in such a way that a signal lamp is extracted from the image taken by a camera provided at a vehicle, and the extracted signal lamp is compared with the image of the signal lamp stored by pattern in a driving control module.

### Advantageous Effects

According to the present invention, when a driver sets a destination on a navigation device, a mapping module provided in the inside of an automatic driving device receives a route information set on the navigation device and converts a distance, direction and rotation angle into an actual measurement data with which a vehicle is actually driven, thus forming a driving lane. A driving control module allows a vehicle to be driven along the driving lane, while controlling an accelerator, brake and a steering device of a vehicle. To this end, the vehicle can be automatically driven to the destination.

The driving control module provided in an automatic driving device of the present invention may store information on an angle at which a wheel rotates when adjusting an accurate position of each wheel of a vehicle and a steering device and a size of each wheel, whereupon the vehicle can be accurately driven along a driving lane formed by the mapping module.

In the present invention, the driving safety module provided at the automatic driving device may include a wireless receiver unit, thus detecting a signal of a signal lamp by receiving in real time an information of a signal lamp from each signal lamp, so the vehicle can be drive in compliance with a signal, while being driven in safe at a crossroad and a crosswalk.

In addition, when setting a mapping module, the width and number of lanes formed on a road on which a vehicle is driven are set. There are formed a main driving lane allowing a vehicle to be directly driven on one of the lanes formed on the road, and an assistant driving lane allowing the vehicle to be driven on another lane. When changing the lane, the assistant driving lane is changed to a main driving lane, thus easily changing the lane.

In the present invention, the automatic driving device may include a position detection module, thus accurately determining a lane on which a vehicle positions in a road, whereupon it is possible to accurately control the vehicle. The storing unit may store a driving lane on which the vehicle was driven before and an image taken by a camera, so if the vehicle uses the sale driving lane, the stored image and an image being currently taken may be compared, thus more accurately controlling the vehicle.

### Brief Description of Drawings

Figure 1 is a block diagram illustrating a conventional automatic driving system for a vehicle.
Figure 2 is a circuit diagram illustrating a conventional automatic driving system for a vehicle.
Figure 3 is a schematic view illustrating a vehicle to which an automatic driving system for a vehicle has applied according to the present invention.
Figure 4 is a block diagram illustrating an automatic driving system for a vehicle according to the present invention.
Figure 5 is a conception view illustrating a signal lamp system installed at a crossroad according to the present invention.
Figure 6 is a conception view illustrating a driving lane formed by a mapping module of an automatic driving system for a vehicle according to the present invention.
Figure 7 is a block diagram illustrating an automatic driving system for a vehicle according to another exemplary embodiment of the present invention.
Figure 8 is a block diagram illustrating an automatic driving system for a vehicle according to further another exemplary embodiment of the present invention.
Figure 9 is a conception view illustrating a road according to an exemplary embodiment in Figure 8.
Figure 10 is a block diagram illustrating an automatic driving system for a vehicle according to still further another exemplary embodiment of the present invention.
Figure 11 is a block diagram illustrating an automatic driving system for a vehicle according to still further another exemplary embodiment of the present invention.

### Best Modes for carrying out the invention

The exemplary embodiments of the present invention will be described with reference to the accompanying drawings. The same elements in the drawings will be given the same reference numbers. The repeated descriptions on the same elements will be omitted. It should be understood that the present invention may be implemented in multiple different aspects and is not limited to the described contents.

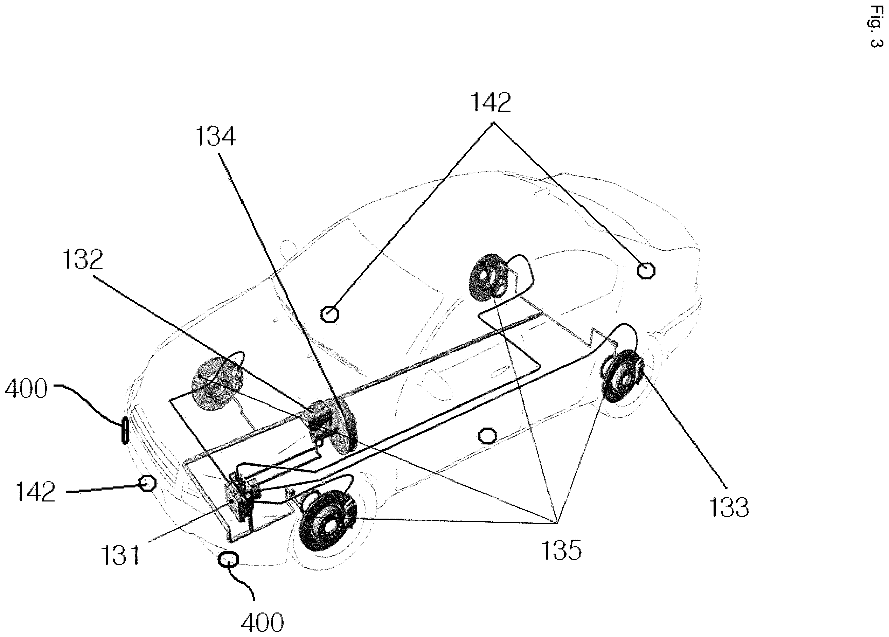

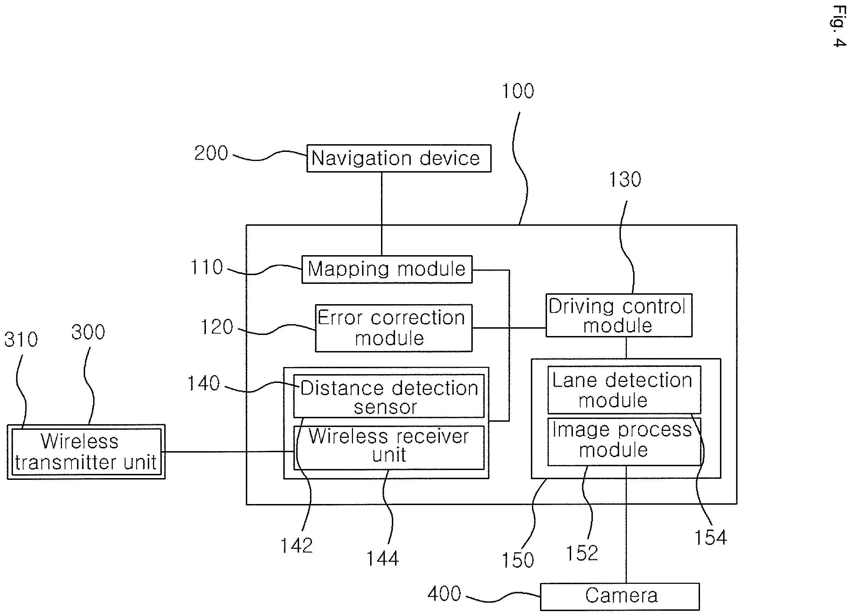

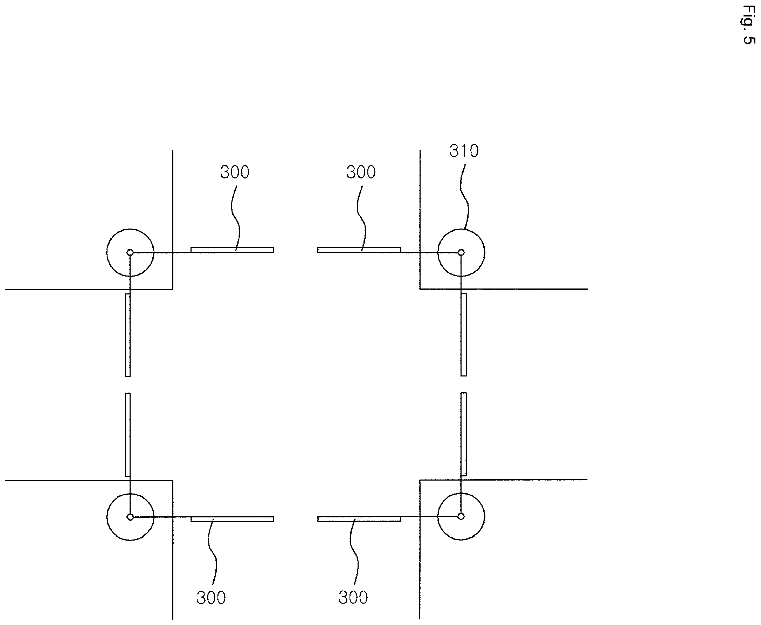

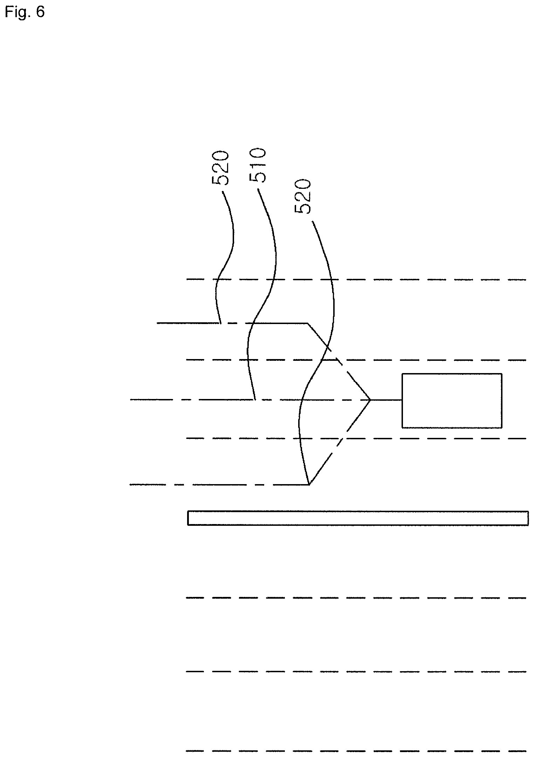

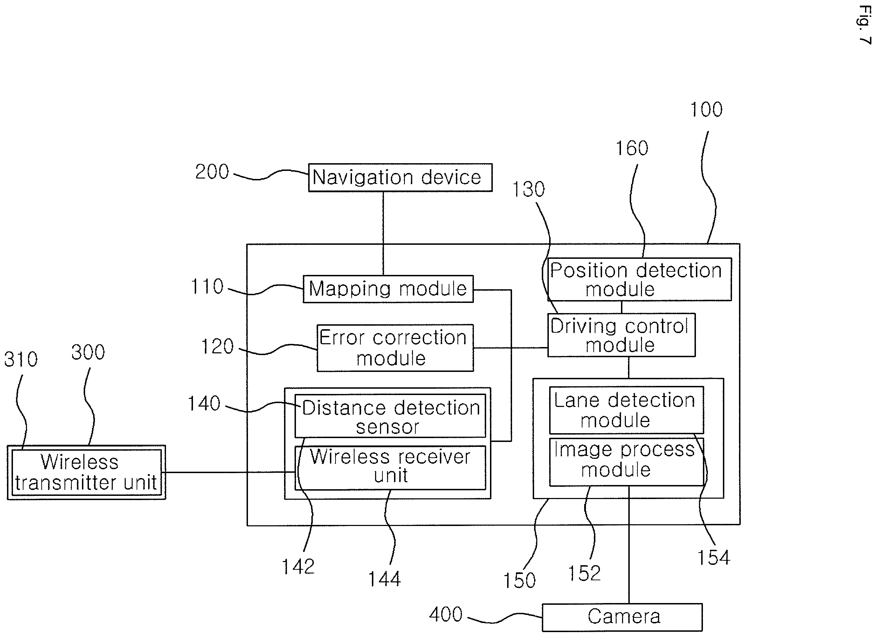

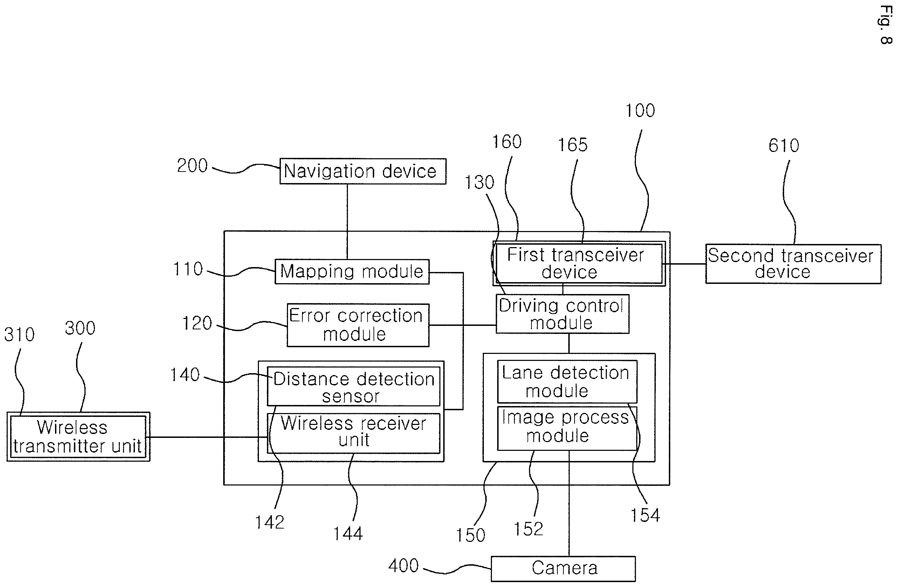

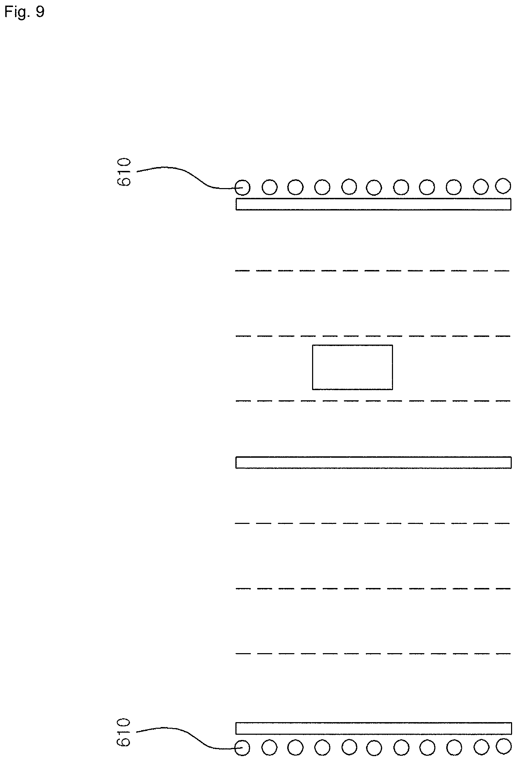

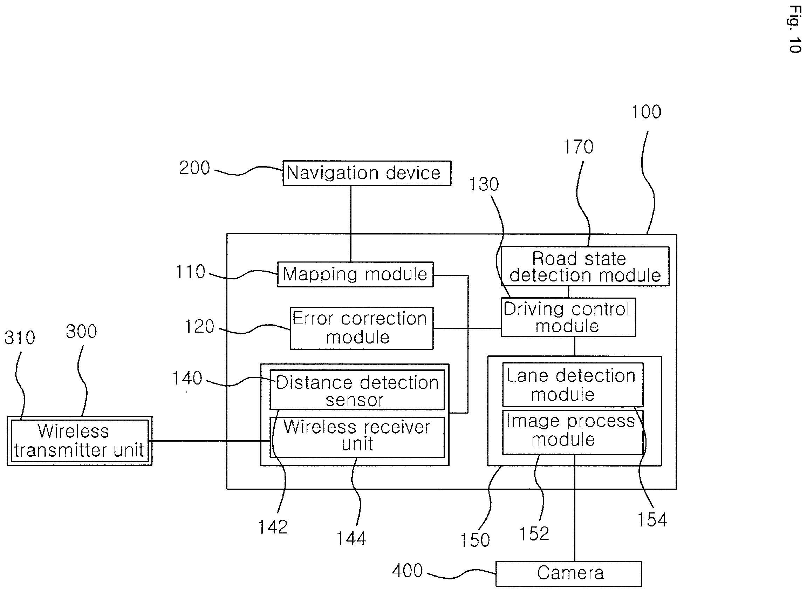

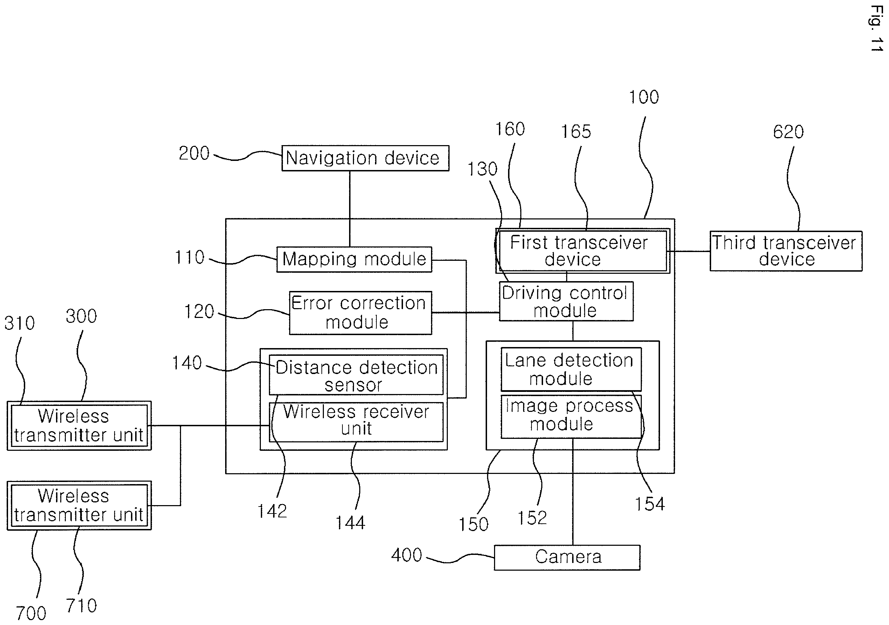

Figure 3 is a schematic view illustrating a vehicle to which an automatic driving system for a vehicle has applied according to the present invention. Figure 4 is a block diagram illustrating an automatic driving system for a vehicle according to the present invention. Figure 5 is a conception view illustrating a signal lamp system installed at a crossroad according to the present invention. Figure 6 is a conception view illustrating a driving lane formed by a mapping module of an automatic driving system for a vehicle according to the present invention. Figure 7 is a block diagram illustrating an automatic driving system for a vehicle according to another exemplary embodiment of the present invention. Figure 8 is a block diagram illustrating an automatic driving system for a vehicle according to further another exemplary embodiment of the present invention. Figure 9 is a conception view illustrating a road according to an exemplary embodiment in Figure 8. Figure 10 is a block diagram illustrating an automatic driving system for a vehicle according to still further another exemplary embodiment of the present invention. Figure 11 is a block diagram illustrating an automatic driving system for a vehicle according to still further another exemplary embodiment of the present invention.

The present invention is directed to an automatic driving system for a vehicle which is installed at a vehicle and allows for the vehicle to be automatically driven to a destination. As illustrated in Figures 3 and 4, it may include an automatic driving device 100 which allows to control a vehicle. The automatic driving device 100 may include, but is not limited to, a mapping module 110, an error correction module 120, a driving control module 130, and a driving safety module 140.

Here, the mapping module 110 is configured to receive a route information from the current position to a destination that a user sets on a navigation device 200 installed at a vehicle and to set a driving lane on which the vehicle may be actually driven. The driving lane may be set by converting a distance, a direction and a rotation angle in the received route information into an actual measurement data.

In addition, the driving control module 130 is configured to control the vehicle to be driven along a driving lane set by the mapping module 110. The driving control module 130 may control an engine 132, a brake 133 and a steering device 134 with the aid of a ECU (Electronic Control Unit) 131 installed at the vehicle.

At this time, the driving control module 130 is configured to store the information on the positions of wheels installed at the vehicle, the rotation angle of the wheels which rotate when operating the steering device 134, and the diameter of each wheel. When it controls the vehicle along the driving lane, the control is performed in consideration of the above vehicle information.

When the vehicle is driven on a curved road, the steering device 134 is rotated based on the curvature of the driving lane. When the steering device 134 is rotated, front wheels rotate at a predetermined angle. Since the front wheels and the rear wheels are spaced apart at a predetermined interval, the curvature radius at which the vehicle rotates changes based on the interval between the front wheels and the rear wheels. This change is calculated, and the steering device is controlled so as to rotate the front wheels at an angle matching with the curvature radius of the driving lane.

When the steering device 134 is controlled, the rotation of the steering device 134 is controlled by installing a motor (not illustrated) at the steering device 134. At this time, the motor (not illustrated) equips with an encoder (not illustrated), which allows the ECU 131 to recognize the rotation angle of the motor (not illustrated). The rotation angle of the steering device 134 can be accurately controlled in such a way to accurately control the rotation of the motor (not illustrated) with the aid of the ECU 131.

A rotation detection sensor 135 is installed at a portion where the wheel of the vehicle is installed. In the driving control module 130, the circumference of the wheel based on the diameter of the wheel is calculated and multiplied by the revolution of the wheel detected by the rotation detection sensor 135, thus obtaining a distance that the vehicle has been actually driven.

To this end, it is possible to determine where the vehicle positions on the driving lane set by the mapping module 110.

In the mapping module 110, when a driving lane is set, the information on a crossroad, a crosswalk, a tunnel, a signal lamp and a regulated speed on a road on the driving lane are set together. In the driving control module 130, the circumference of the wheel is multiplied by the revolution per unit time detected by the rotation detection sensor 135, thus obtaining an actual speed of the vehicle. The speed can be adjusted by increasing or decreasing the output of the engine 132 installed at a vehicle based on the regulated speed of the current road with the aid of the above calculated value.

When it needs to urgently reduce the speed, the speed of the vehicle is decelerated by controlling the brake 133, thus coping with an emergency situation.

Meanwhile, if the vehicle is driven a predetermined distance in such a way that the automatic driving device 100 controls the vehicle, a predetermined error inevitably occurs even though the vehicle is very accurately controlled. Here, there is provided an error correction module 120 so as to correct such an error of the vehicle.

The error correction module 120 is configured to receive in real time the current position of the vehicle from the navigation device 200, and the position on the driving lane of the vehicle being controlled by the automatic driving module 130 is compared with the current position received from the navigation device 200. If the error exceeds a predetermined level, the error correction module 120 may correct the driving lane based on the current position of the vehicle received from the navigation device, thus correcting the error.

Here, the range of the error may be set by the driver. If the range of the error is set too wide, since the difference between the actual position of the vehicle and the position of the vehicle that the automatic driving module 130 recognizes is too large, the safety driving may be threatened. If the range of the error is set two small, it needs to frequently correct the driving lane. While the driving lane is being corrected, the functions of the remaining modules may be limited, whereupon an appropriate range of the error should be set for the sake of safety driving.

The driving safety module 140 allows to control the vehicle so as to avoid any collision with other vehicles or things when the vehicle is driven while detecting other vehicles or things being near the vehicle.

At this time, a distance detection sensor 142 may be installed at front, rear, left and right sides of the vehicle so as to detect other vehicles or things being near the vehicle, thus detecting the distance to other things or vehicles being near the vehicle.

Here, it is preferred that the distance detection sensor 142 may be installed in a diagonal direction of the vehicle, not at the front, rear, left and right sides of the vehicle so as to more accurately detect any dangerous components near the vehicle, which may allows the vehicle to be driven in safe.

Meanwhile, the driving safety module 140 may include a wireless receiver unit 144. As illustrated in Figure 5, the wireless receiver unit 144 is configured to receive a signal lamp information that the wireless transmitter unit 310 installed at the signal lamp 300 at a crossroad or a crosswalk transmit.

Therefore, the driving safety module 140 may transmit the received signal lamp information to the driving control module 130, whereupon the vehicle can be controlled in consideration of the signal of the signal lamp, thus allowing the vehicle to be driven in compliance with the signal lamp.

When the driving lane is set in the above way, the information on the crossroad, the crosswalk, and the signal lamp are set together. When the vehicle positions within a predetermined range while the vehicle is being driven as compared with the position where the signal lamp 300 is installed, the driving safety module 140 may obtain from the information on the signal lamp the frequency that the wireless transmitted unit 310 at a corresponding signal lamp 300 transmits so as to have the wireless receiver unit 144 installed in the inside receive only a corresponding frequency, thus preventing any confusion with the signal from other signal lamps 300 being nearby.

A plurality of signal lamps 300 in general are installed at one crossroad. The plurality of the signal lamps 300 installed at one crossroad change their signals operating in sync with one another, whereupon all the signals of the signal lamps installed at one crossroad are transmitted through one wireless transmitter unit 310.

At this time, since the wireless transmitter unit 310 installed at each signal lamp 300 may transmit in real time the signal lamp information using an exclusive frequency, the driving safety module 140 can obtain a frequency of a corresponding signal lamp 300 stored in the information of the driving lane and can receive only a signal corresponding to the corresponding signal lamp 300.

To this end, the driving control module 130 can detect in real time the signal of the signal lamp 300, thus allowing the vehicle to be driven in safe in compliance with the signal.

Meanwhile, the mapping module 110 may store a detailed information on each road. When the driving lane is set, the information on the width and number of the lanes formed on each road on which the vehicle is driven are set.

When the mapping module 110 sets a driving lane, as illustrated in Figure 6, a main driving lane 510 allowing the vehicle to be directly driven on one lane among the lanes formed on the road is set, and at the same time, an assistant driving lane 520 allowing the vehicle to be driven on other lanes is set.

Therefore, if a corresponding lane is blocked while the vehicle is being driven on the main driving lane 510 or if there is an obstacle, the driving lane being nearest the assistant driving lane 520 is selected as a main driving lane 510, and the lane is changed to the selected driving lane, thus more safely and easily changing the lane.

When the lane is changed, it needs to check if there are other vehicles near the vehicle with the aid of the driving safety module 140, and then the lane is changed.

In addition, the automatic driving device 100 may further include a lane control module 150 which allows to detect a lane so as to control the vehicle not to deviate from the lane on which the vehicle has been driven. The lane control module 150 may include an image process module 152 for processing the images from the camera 400 installed at a front side of the vehicle and is configured to analyze the images processed by the image process module 152, thus determining the lane by comparing the patterns of various lanes (center line, driving lane, shoulder, etc.), so it can determine what lane the vehicle currently positions on.

The thusly determined information is transmitted to the driving control module 130. The driving control module 130 can control the vehicle to immediately return to the normal position if the vehicle has been driven on the wrong lane, not the normal lane, thus preventing any vehicle accident.

As illustrated in Figure 7, according to another exemplary embodiment of the present invention, the automatic driving device 100 may include a position detection module 160 for detecting the current position of the vehicle. The position detection module 160 is able to determine the current position of the vehicle in such a way to recognize the lane from the images taken by the camera disposed at a front side of the vehicle.

Here, the camera 400 may position at any portion of the vehicle, but the camera 400 is preferably installed at the top of the vehicle so as to take pictures in all the directions of the road, thus effectively taking pictures in both directions of the vehicle.

The image process module 152 disposed in the inside of the lane control module 150 is configured to process the images taken by the camera 400. The lane detection module 154 may compare the thusly taken images with the previously stored lanes, thus determining the lanes.

At this time, the position detection module 160 is able to accurately determine the lane on which the vehicle positions with the aid of the information on the lanes of the left and right sides of the vehicle determined by the lane control module 150.

Since it is possible to accurately determine the position of the vehicle detected based on the information of the navigation and the driving information of the vehicle, namely, the information on where the vehicle positions and the accurate lane on which the vehicle positions detected by the vehicle position detection module 160, the vehicle can be accurately controlled.

In addition, since the remaining configuration is same as the earlier described configuration, the description thereof will be omitted.

Meanwhile, as illustrated in Figures 8 and 9, according to further another exemplary embodiment of the present invention, the automatic driving device 100 may include a position detection module 160 for detecting the current position of a vehicle. The position detection module 160 is configured to measure the distance from an edge of the road to the current vehicle, thus determining the position of the vehicle.

Here, the position detection module 160 may include a first transceiver device 165 for transmitting and receiving a high frequency signal, and a second transceiver device 610 spaced apart at a predetermined interval is provided at an edge of the road on which the vehicle is driven, thus receiving the high frequency signal transmitted from the first transceiver device 165 and transmitting a signal to the first transceiver device 165.

At this time, the position detection module 160 is configured to calculate a time that a signal transmitted from the first transceiver device 165 returns back, thus calculating the distance to the second transceiver device 610. Each second transceiver device 610 is assigned an exclusive recognition number. Since it is possible to recognize a signal of each second transceiver device 610, the distance to each second transceiver 610 can be calculated.

To this end, the edges of both side of the road and the position of the vehicle can be accurately calculated. The lane on which the current vehicle positions can be accurately determined with reference to the width of the lane stored in the mapping module 110, thus stably controlling the vehicle.

Meanwhile, the second transceiver device 610 may be installed on the center line formed in the center of the road.

In addition, since the remaining configuration is same as the earlier described configuration, the description thereof will be omitted.

According to still further another object of the present invention, as illustrated in Figure 10, the automatic driving device 100 of the present invention may include a road state detection module 170 for detecting the state of the road. The road state detection module 170 is configured to process the images taken by the camera 400 provided in the vehicle and to check if there is any dent portion or crack on the road by comparing with the common road and to determine if the size of the checked portion is large enough to interfere with the operation of the vehicle.

If it is determined that the checked portion is large enough to have effect on the operation of the vehicle, the driving lane is changed, and otherwise the vehicle is driven on the initial driving lane.

As not illustrated in the drawings, a storing unit (not illustrated) may be provided in the inside of the automatic driving device 100 so as to store the information of the driving lane on which the vehicle was driven before and control the vehicle based on the stored driving information if the vehicle is driven next time to the same destination or to a nearby destination, thus more stably controlling the vehicle.

When the driving information is stored, the images taken by the camera 400 are stored together with the driving lane. If the vehicle is driven on the lane on which the vehicle was driven before, the vehicle is controlled on a previously stored driving lane, and the vehicle can be controlled while comparing the taken images and the image being taken during the driving, whereupon the vehicle can be driven even on a narrow alley.

At this time, the camera 400 is installed at the top of the vehicle and is configured to take pictures in the direction where the vehicle is being driven. When storing the taken images, the images are stored by matching the current position on the driving lane with the taken images.

In addition, when the vehicle is driven on an alloy where there are little vehicle, namely, in case where the lanes cannot be recognized after the taken images are processed by the image process module 152, a track portion is extracted from the taken images, and a boundary line of the rack is illustrated at an edge of the track portion and is stored. When the vehicle is driven next time on the same route, the vehicle can be controlled more safely with reference to the boundary line of the track.

The images taken by the camera 400 are compared with the previously stored images, thus detecting a special thing or a person which positions in the proceeding direction of the vehicle, whereby any accident can be prevented.

Meanwhile, since the technology for comparing such images is a known technology, the description thereof will be omitted. Since the remaining configuration is same as the earlier described configuration, the description thereof will be omitted.

Referring to Figure 11, according to still further another embodiment of the present invention, the driving safety module 140 of the automatic driving device 100 of the present invention may include a wireless receiver unit 144 for receiving an external wireless signal. The wireless receiver unit 144 is configured to receive the information of each parking lot 700 transmitted from the wireless transceiver unit 710.

Here, the parking lot 700 is given an exclusive recognition number. The wireless signal containing the exclusive number is transmitted. The information transmitted from the parking lot 700 includes a detailed geographical information of each parking lot 700, and the parking state of the parked vehicle.

The wireless receiver unit 144 refers to a geographical information and a parking state information from the parking lot 700 and the size of the vehicle stored in the driving control module 130 and the size of the wheel and the rotation angle of the wheels rotating when the steering device 134 is operated. The mapping module 110 according to the present invention is configured to select the position where the vehicle parks and form a specific driving lane to move the vehicle to where the vehicle parks, whereupon the vehicle can be automatically controlled and parked with the aid of the driving control module 130.

At a predetermined position of each parking lot 70, there is provided a third transceiver device 620 which allows to accurately detect the position of the vehicle on the parking lot 700 with the aid of the first transceiver device 165 disposed at the vehicle, which makes it possible to accurately control the vehicle.

At this time, the third transceiver device 620 may be installed at an edge portion of the parking lot 700 or in a corner portion, which helps to accurately determine the position of the vehicle in the parking lot 700.

According to still further another exemplary embodiment of the present invention, the camera 400 installed at the vehicle takes pictures of the forward scenes of the vehicle. If the vehicle has moved near a crossroad, the image process module 152 may analyze the image of the signal lamp 300 in the direction that the vehicle is intended to move, among the images taken by the camera 400, thus determining the current signal of the signal lamp.

Here, the driving control module 130 may store various samples obtained based on various types of the signal lamp and the signals on the signal lamps. The current signal of the signal lamp can be determined in such a way to compare the samples with the image of the signal lamp captured by the image process module 152.

According to still further another exemplary embodiment of the present invention, the wireless receiver unit 144 of the driving safety module 140 may receive an information on the communication network which is generally used. If the user of the vehicle which stays at a distance region transmits a destination of the vehicle on a communication terminal, for example, an internet terminal (not illustrated) or a smart phone, the wireless receiver unit 144 receives the designation through the communication network, and the driving control module 130 detects the same and controls the vehicle to be driven to the destination, which is performed unmanned.

To this end, even though the user stays in a distant region spaced apart from the vehicle, if the user needs his vehicle, the user sets the destination of the vehicle on the smart phone or the computer, and the vehicle recognizes such as a control and may move unmanned, whereupon the user can more conveniently use the vehicle.

According to still further another exemplary embodiment of the present invention, a detection module (not illustrated) may be separately provided in the inside of the vehicle. For this, the vehicle is able to detect a key or a predetermined RFD card that the user has. When the detection module of the vehicle detects that a user enters a predetermined range, the vehicle may output a certain horn or may output a set sound through speakers or may control an emergency lamp to be turned on, by which the user can recognize the position of the vehicle, thus easily locating the position of the vehicle.

If the user does not has a key or a RFID card, the image of the user can be received from the camera 400, and the process module 152 determines if the user is a registered user. In case of the registered user, all the functions of the vehicle can be used if the user does not have any key or RFID card.

Meanwhile, according to still further another exemplary embodiment of the present invention, the driving safety module 140 provided a the vehicle can equip with a separate wireless transceiver device (not illustrated), so the current state of the vehicle can be transmitted to a nearby vehicle through a wireless transceiver device (not illustrated), and the nearby vehicle receives through the wireless receiver unit 144 provided at the driving safety module 144, thus checking in real time the information of the nearby vehicles.

To this end, it is possible to know in real time if any door of the vehicle is closed complete. When a person passes by near a corresponding vehicle, the person can be careful, thus coping with any emergency situation which may occur since the door is suddenly opened.

### Industrial Applicability

The present invention relates to an automatic driving system for a vehicle, and in particular to an automatic driving system for a vehicle wherein when a driver sets a destination on a navigation device, a vehicle can be controlled to be automatically driven to the set destination in consideration of traffic signals, nearby vehicles and things.

## Claims

1. An automatic driving system for a vehicle, comprising:
a mapping module (110) which receives a route information set on a navigation device (200) installed at a vehicle and converts a distance, a direction and a rotation angle into an actual data, or real data, and sets a driving lane; wherein the mapping module (110) is configured to store information on the width and number of the lanes formed on each road on which the vehicle is driven and form a main driving lane (510) allowing the vehicle to be directly driven on any of the lanes formed on the road, and an assistant driving lane (520) allowing the vehicle to be driven on other lanes;
**characterised by**
a driving control module (130) which allows the vehicle to be driven on the driving lane set by the mapping module (110); and
a position detection module (160) for detecting the position of the vehicle, wherein the position detection module (160) includes a first transceiver device (165) for transmitting and receiving a high frequency signal, and a second transceiver device (610) is installed spaced apart at a predetermined interval at both sides of the road so as to receive the signal from the first transceiver device (165) and transmit again, and the position detection module (160) is configured to determine the lane on which the vehicle positions on the road with the aid of the information on the distance between the both sides of the road and on the width of the lane which are detected based on the signal transmitted through the first and second transceiver devices (165, 610).

2. The system of claim 1, wherein the driving control module (130) is configured to store a vehicle information on a position of each wheel, a rotation angle of each wheel rotating when a steering device (134) is operated, and a diameter of each wheel.

3. The system of claim 2, wherein the driving control module (130) is configured to control an engine (132), a brake (133) and the steering device (134) in consideration of the vehicle information for the vehicle to be driven on a driving lane with the aid of an ECU (Electronic Control Unit) (131) provided at the vehicle.

4. The system of claim 1, further comprising:
an error correction module (120) which is able to correct a driving lane based on the current position of the vehicle received from the navigation device (200) by comparing the current position of the vehicle received from the navigation device (200) with the position on the driving lane.

5. The system of claim 1, further comprising:
a driving safety module (140) which allows to prevent any collision in such a way to detect other vehicles or things near the vehicle with the aid of a distance detection sensor (142) installed at front, rear, left and right sides of the vehicle.

6. The system of claim 5, wherein the driving safety module (140) includes a wireless receiver unit (144) which is able to receive a signal lamp information from a wireless transmitter unit (310) installed at a signal lamp (300) at a crossroad or a crosswalk.

7. The system of claim 1, wherein when setting a driving lane, the mapping module (110) sets together information on a crossroad, a crosswalk, a tunnel, a signal lamp, a regulated speed of a road, and an exclusive frequency of each signal lamp (300).

8. The system of claim 1, further comprising a lane control module (150) for detecting the lane in order for the vehicle not to deviate from the lane.

9. The system of claim 8, wherein the lane control module (150) includes:
an image process module (152) which is configured to process the images transmitted from a camera (400) installed at a front side of the vehicle; and
a lane detection module (154) which is configured to determine each lane by analyzing the pattern of each lane in the images processed by the image process module (152).

10. The system of claim 1, further comprising:
a road state detection module for determining the state of the road, and the road state detection module is configured to determine if there is any crack or dent on the road in such a way to analyze the images taken by the camera installed at the vehicle.

11. The system of claim 1, comprising a storing unit including a storing part for storing a driving information which contains the driving lane on which the vehicle was driven before and the images taken by the camera installed at the vehicle, and the images are stored matched with the positions on the driving lane.

12. The system of claim 11, wherein when the vehicle is driven on the lane where the vehicle was driven before, the vehicle is controlled while comparing the images stored in the storing unit with the images taken by the camera.

13. The system of claim 2, wherein the wireless receiver unit (144) receives, through the wireless transceiver unit provided at a parking lot (700), a geographical information on the parking lot (700) where the vehicle parks and the information of a space in which the vehicle is parking, and the mapping module (110) forms a specific driving lane to move the vehicle from the current position of the vehicle to a position where the vehicle parks, thus parking the vehicle.

14. The system of claim 13, wherein
the position detection module (160) equips with the first transceiver device (165) for transmitting and receiving a high frequency signal, and a third transceiver device (620) is provided at an edge portion of the parking lot (700) so as to receive a signal of the first transceiver device (165) and transmit again, and the position detection module (160) is able to measure the position of the vehicle with the aid of information on an edge portion and the geographical information on the parking lot which are detected through the signals transmitted from the first and third transceiver devices (165, 620).

15. The system of claim 9, wherein a signal lamp image is extracted from the image taken by the camera (400) provided at the vehicle, and the extracted signal lamp image is compared with the image of the signal lamp stored by pattern in the driving control module (130), thus determining the current signal.

16. The system of claim 11, wherein a boundary line is added to an edge of each of both sides of the road in the taken images and is stored.

17. The system of claim 12, wherein whether or not any obstacle is on the road is detected in such a way to compare the image taken during the driving of the vehicle with a previous image.

## Patentansprüche

1. Ein Automatisches-Fahren-System für ein Fahrzeug, aufweisend:
ein Abbildungsmodul (110), welches eine auf einer an einem Fahrzeug angebrachten Navigationsvorrichtung (200) eingestellte Routeninformation empfängt und eine Distanz, eine Richtung und einen Drehwinkel in tatsächliche Daten oder reale Daten umwandelt und eine Fahrspur setzt, wobei das Abbildungsmodul (110) dazu eingerichtet ist, Informationen über die Breite und Anzahl der Spuren, welche auf jeder Straße, auf der das Fahrzeug gefahren wird, ausgebildet sind, zu speichern und eine Hauptfahrspur (510), welche es dem Fahrzeug erlaubt, direkt auf irgendeiner der auf der Straße ausgebildeten Spuren gefahren zu werden, und eine Assistenzfahrspur (520), welche es dem Fahrzeug erlaubt, auf anderen Spuren gefahren zu werden, zu bilden,
**gekennzeichnet durch**
ein Fahrsteuerungsmodul (130), welches es dem Fahrzeug erlaubt, auf der durch das Abbildungsmodul (110) gesetzte Fahrspur gefahren zu werden, und
ein Positionserfassungsmodul (160) zum Erfassen der Position des Fahrzeugs, wobei das Positionserfassungsmodul (160) eine erste Sender-Empfänger-Vorrichtung (165) zum Senden und Empfangen eines Hochfrequenzsignals aufweist und eine zweite Sender-Empfänger-Vorrichtung (610) im Abstand mit einer vorbestimmten Distanz auf beiden Seiten der Straße installiert ist, um das Signal von der ersten Sender-Empfänger-Vorrichtung (165) zu empfangen und erneut zu übertragen, und wobei das Positionserfassungsmodul (160) dazu eingerichtet ist, die Spur, auf welcher sich das Fahrzeug auf der Straße positioniert, zu ermitteln mit Hilfe der Informationen über die Distanz zwischen den beiden Seiten der Straße und über die Breite der Spur, welche basierend auf dem durch die erste und die zweite Sender-Empfänger-Vorrichtung (165, 610) übertragenen Signal erfasst werden.

2. Das System nach Anspruch 1, wobei das Fahrsteuerungsmodul (130) dazu eingerichtet ist, eine Fahrzeuginformation über eine Position jedes Rads, einen Drehwinkel jedes Rads, welcher sich drehen, wenn eine Lenkvorrichtung (134) betrieben wird, und einen Durchmesser jedes Rads zu speichern.

3. Das System nach Anspruch 2, wobei das das Fahrsteuerungsmodul (130) dazu eingerichtet ist, einen Motor (132), eine Bremse (133) und die Lenkvorrichtung (134) unter Berücksichtigung der Fahrzeuginformation zu steuern, damit das Fahrzeug auf einer Fahrspur mittels der Hilfe einer am Fahrzeug vorgesehenen ECU (Elektronische Steuereinheit) (131) gefahren wird.

4. Das System nach Anspruch 1, ferner aufweisend:
ein Fehlerkorrekturmodul (120), welches dazu imstande ist, eine Fahrspur basierend auf der momentanen Position des Fahrzeugs, welche von der Navigationsvorrichtung (200) aus empfangen wird, zu korrigieren durch Vergleichen der momentanen Position des Fahrzeugs, welche von der Navigationsvorrichtung (200) aus empfangen wird, mit der Position auf der Fahrspur.

5. Das System nach Anspruch 1, ferner aufweisend:
ein Fahrsicherheitsmodul (140), welches es erlaubt, jegliche Kollision in solch einer Weise zu vermeiden, dass andere Fahrzeuge oder Objekte nahe dem Fahrzeug mit Hilfe eines an der vorderen, hinteren, linken und rechten Seite des Fahrzeugs installierten Distanzerfassungssensors (142) erfasst werden.

6. Das System nach Anspruch 5, wobei das Fahrsicherheitsmodul (140) aufweist eine drahtlose Empfängereinheit (144), welche dazu imstande ist, eine Signallampeninformation von einer drahtlosen Sendereinheit (310), welche an einer Signallampe (300) an einer Kreuzung oder einem Fußgängerüberweg installiert ist, zu empfangen.

7. Das System nach Anspruch 1, wobei, beim Setzen einer Fahrspur, das Abbildungsmodul (110) Informationen über eine Kreuzung, einen Fußgängerüberweg, einen Tunnel, eine Signallampe, eine regulierte Geschwindigkeit einer Straße und eine exklusive Frequenz jeder Signallampe (300) zusammensetzt.

8. Das System nach Anspruch 1, ferner aufweisend ein Spursteuermodul (150) zum Erfassen der Spur, damit das Fahrzeug nicht von der Spur abkommt.

9. Das System nach Anspruch 8, wobei das Spursteuermodul (150) aufweist:
ein Bildverarbeitungsmodul (152), welches dazu eingerichtet ist, die von einer an einer Vorderseite des Fahrzeugs installierten Kamera (400) übertragenen Bilder zu verarbeiten, und
ein Spurerfassungsmodul (154), welches dazu eingerichtet ist, jede Spur durch Analysieren der Muster einer jeden Spur in den durch das Bildverarbeitungsmodul (152) verarbeiteten Bildern zu ermitteln.

10. Das System nach Anspruch 1, ferner aufweisend:
ein Straßenzustandserfassungsmodul zum Erfassen des Zustands der Straßen, und wobei das Straßenzustandserfassungsmodul dazu eingerichtet ist, zu ermitteln, falls irgendein Riss oder Loch auf der Straße vorhanden ist, in solch einer Weise, dass die durch die an dem Fahrzeug installierte Kamera aufgenommenen Bilder analysiert werden.

11. Das System nach Anspruch 1, aufweisend eine Speichereinheit, welche einen Speicherungsteil zum Speichern einer Fahrinformation aufweist, welche die Fahrspur, auf welcher das Fahrzeug zuvor gefahren wurde, und die durch die an dem Fahrzeug installierte Kamera aufgenommenen Bilder enthält, und wobei die Bilder den Positionen auf der Fahrspur zugeordnet abgespeichert werden.

12. Das System nach Anspruch 11, wobei, wenn das Fahrzeug auf der Spur gefahren wird, auf der das Fahrzeug zuvor gefahren wurde, das Fahrzeug gesteuert wird, während die in der Speichereinheit gespeicherten Bilder mit den durch die Kamera aufgenommenen Bildern verglichen werden.

13. Das System nach Anspruch 2, wobei die drahtlose Empfängereinheit (144) durch die an einem Parkplatz (700) vorgesehene drahtlose Sender-Empfänger-Einheit eine geographische Information über den Parkplatz (700), wo das Fahrzeug parkt, und die Information über einen Raum, in welchem das Fahrzeug einparkt, empfängt, und wobei das Abbildungsmodul (110) eine spezifische Fahrspur zum Bewegen des Fahrzeugs von der momentanen Position des Fahrzeugs zu einer Position, wo das Fahrzeug parkt, bildet, wodurch das Fahrzeug geparkt wird.

14. Das System nach Anspruch 13, wobei
das Positionserfassungsmodul (160) mit der ersten Sender-Empfänger-Vorrichtung (165) zum Senden und Empfangen eines Hochfrequenzsignals ausgestattet ist und eine dritte Sender-Empfänger-Vorrichtung (620) an einem Randabschnitt des Parkplatzes (700) dazu vorgesehen ist, ein Signal der ersten Sender-Empfänger-Vorrichtung (165) zu empfangen und erneut zu übertragen, und wobei das Positionserfassungsmodul (160) dazu imstande ist, die Position des Fahrzeugs zu messen mit der Hilfe von Informationen über einen Randabschnitt und der geographischen Information über den Parkplatz, welche durch die Signale, die von der ersten und der dritten Sender-Empfänger-Vorrichtung (165, 620) übertragen werden, detektiert werden.

15. Das System nach Anspruch 9, wobei eine Signallampe aus den durch die an dem Fahrzeug vorgesehene Kamera (400) aufgenommenen Bildern extrahiert wird und die extrahierte Signallampe mit dem Bild der Signallampe, welches nach Muster in der Fahrsteuerungsmodul (130) gespeichert ist, verglichen wird, wodurch das momentane Signal ermittelt wird.

16. Das System nach Anspruch 11, wobei eine Begrenzungslinie zu einem Rand einer jeden der beiden Seiten der Straße in den aufgenommenen Bildern hinzugefügt wird und gespeichert wird.

17. Das System nach Anspruch 12, wobei erfasst wird, ob sich ein Hindernis auf der Straße befindet oder ob nicht, in solch einer Weise, dass das während des Fahrens des Fahrzeugs aufgenommene Bild mit einem vorherigen Bild verglichen wird.

## Revendications

1. Système de conduite automatique pour un véhicule, comprenant :
un module de cartographie (110) qui reçoit un ensemble d'informations d'itinéraire sur un dispositif de navigation (200) installé au niveau d'un véhicule et convertit une distance, une direction et un angle de rotation en données actuelles, ou données réelles, et définit une voie de circulation ; dans lequel le module de cartographie (110) est configuré pour stocker des informations sur la largeur et le nombre des voies formées sur chaque route sur laquelle le véhicule est conduit et pour former une voie circulation principale (510) permettant au véhicule d'être conduit directement sur l'une quelconque des voies formées sur la route, et une voie de circulation auxiliaire (520) permettant au véhicule d'être conduit sur d'autres voies ;
**caractérisé par**
un module de commande de conduite (130) qui permet au véhicule d'être conduit sur la voie de circulation définie par le module de cartographie (110) ; et
un module de détection de position (160) pour détecter la position du véhicule, dans lequel le module de détection de position (160) comprend un premier dispositif émetteur-récepteur (165) pour émettre et recevoir un signal haute fréquence, et un deuxième dispositif émetteur-récepteur (610) est installé en étant espacé à un intervalle prédéterminé des deux côtés de la route de manière à recevoir le signal provenant du premier dispositif émetteur-récepteur (165) et à émettre à nouveau, et le module de détection de position (160) est configuré pour déterminer la voie sur laquelle le véhicule se positionne sur la route à l'aide des informations sur la distance entre les deux côtés de la route et sur la largeur de la voie qui sont détectées sur la base du signal transmis à travers les premier et deuxième dispositifs émetteurs-récepteurs (165, 610).

2. Système selon la revendication 1, dans lequel le module de commande de conduite (130) est configuré pour stocker des informations de véhicule concernant une position de chaque roue, un angle de rotation de chaque roue en rotation lorsqu'un dispositif de direction (134) est actionné, et un diamètre de chaque roue.

3. Système selon la revendication 2, dans lequel le module de commande de conduite (130) est configuré pour commander un moteur (132), un frein (133) et le dispositif de direction (134) en tenant compte des informations de véhicule pour le véhicule à conduire sur une voie de circulation à l'aide d'une ECU (Unité de Commande Électronique) (131) agencée au niveau du véhicule.

4. Système selon la revendication 1, comprenant en outre :
un module de correction d'erreur (120) qui est capable de corriger une voie de circulation sur la base de la position courante du véhicule reçue depuis le dispositif de navigation (200) en comparant la position courante du véhicule reçue depuis le dispositif de navigation (200) avec la position sur la voie de circulation.

5. Système selon la revendication 1, comprenant en outre :
un module de sécurité de conduite (140) qui permet d'éviter toute collision de manière à détecter d'autres véhicules ou objets à proximité du véhicule à l'aide d'un capteur de détection de distance (142) installé à l'avant, à l'arrière, au niveau des côtés gauche et droit du véhicule.

6. Système selon la revendication 5, dans lequel le module de sécurité de conduite (140) comprend une unité de réception sans fil (144) qui est capable de recevoir des informations de feu de signalisation d'une unité d'émission sans fil (310) installée au niveau d'un feu de signalisation (300) à un carrefour ou un passage pour piétons.

7. Système selon la revendication 1, dans lequel lors de la définition d'une voie de circulation, le module de cartographie (110) définit ensemble des informations concernant un carrefour, un passage pour piétons, un tunnel, un feu de signalisation, une vitesse régulée d'une route, et une fréquence exclusive de chaque feu de signalisation (300).

8. Système selon la revendication 1, comprenant en outre un module de commande de voie (150) pour détecter la voie afin que le véhicule ne s'écarte pas de la voie.

9. Système selon la revendication 8, dans lequel le module de commande de voie (150) comprend :
un module de traitement d'images (152) qui est configuré pour traiter les images transmises par un dispositif de prise de vue (400) installé sur un côté avant du véhicule ; et
un module de détection de voie (154) qui est configuré pour déterminer chaque voie en analysant le motif de chaque voie dans les images traitées par le module de traitement d'images (152).

10. Système selon la revendication 1, comprenant en outre :
un module de détection d'état de route pour déterminer l'état de la route, et le module de détection d'état de route est configuré pour déterminer s'il y a une quelconque fissure ou bosse sur la route de manière à analyser les images prises par le dispositif de prise de vue installé sur le véhicule.

11. Système selon la revendication 1, comprenant une unité de stockage comprenant une partie de stockage pour stocker des information de conduite qui contiennent la voie de circulation sur laquelle le véhicule était auparavant conduit et les images prises par le dispositif de prise de vue installé sur le véhicule, et les images sont stockées en correspondant aux positions sur la voie de circulation.

12. Système selon la revendication 11, dans lequel lorsque le véhicule est conduit sur la voie où le véhicule était auparavant conduit, le véhicule est commandé en comparant les images stockées dans l'unité de stockage avec les images prises par le dispositif de prise de vue.

13. Système selon la revendication 2, dans lequel l'unité de réception sans fil (144) reçoit, par l'intermédiaire de l'unité émetteur-récepteur sans fil agencée au niveau d'un parc de stationnement (700), des information géographiques sur le parc de stationnement (700) où le véhicule se gare et les informations d'un espace dans lequel le véhicule se gare, et le module de cartographie (110) forme une voie de circulation spécifique pour déplacer le véhicule de la position courante du véhicule jusqu'à une position où le véhicule se gare, en garant ainsi le véhicule.

14. Système selon la revendication 13, dans lequel
le module de détection de position (160) est équipé du premier dispositif émetteur-récepteur (165) pour émettre et recevoir un signal haute fréquence, et un troisième dispositif émetteur-récepteur (620) est agencé sur une partie de bord du parc de stationnement (700) afin de recevoir un signal du premier dispositif émetteur-récepteur (165) et émettre à nouveau, et le module de détection de position (160) est capable de mesurer la position du véhicule à l'aide d'informations sur une partie de bord et des informations géographiques sur le parc de stationnement qui sont détectées à travers les signaux émis par les premier et troisième dispositifs émetteurs-récepteurs (165, 620).

15. Système selon la revendication 9, dans lequel une image de feu de signalisation est extraite de l'image prise par le dispositif de prise de vue (400) agencé sur le véhicule, et l'image de feu de signalisation extraite est comparée à l'image du feu de signalisation stockée par motif dans le module de commande de conduite (130), en déterminant ainsi le signal courant.

16. Système selon la revendication 11, dans lequel une ligne de démarcation est ajoutée à un bord de chacun des deux côtés de la route dans les images prises et est stockée.

17. Système selon la revendication 12, dans lequel la présence ou non d'un quelconque obstacle sur la route est détectée de manière à comparer l'image prise lors de la conduite du véhicule avec une image précédente.
